# EUROPÄISCHE PATENTSCHRIFT

(11) **EP 2 064 464 B1**
(45) Veröffentlichungstag und Bekanntmachung des Hinweises auf die Patenterteilung: **01.11.2023**
(21) Anmeldenummer: 07786384.3
(22) Anmeldetag: 27.07.2007
(51) Int. Cl.: F16H 49/00, F16H 25/06

(54) **GETRIEBE**
GEARING
TRANSMISSION

(30) Priorität: 08.09.2006 DE 102006042786
(43) Veröffentlichungstag der Anmeldung: 03.06.2009
(73) Patentinhaber: WITTENSTEIN SE, 97999 Igersheim (DE)
(72) Erfinder: BAYER, Thomas, 97999 Igersheim (DE); SCHMIDT, Michael, 97234 REICHENBERG (DE)
(74) Vertreter: Zimmermann & Partner Patentanwälte mbB
(86) Internationale Anmeldenummer: PCT/EP2007/006670
(87) Internationale Veröffentlichungsnummer: WO 2008/028540

(56) Entgegenhaltungen:
- EP-A- 0 201 730
- WO-A-99/36711
- DE-A1- 3 930 064
- DE-B- 1 182 011
- DE-C- 341 053
- US-A- 3 068 719
- US-A- 3 468 175
- US-A- 4 449 425
- US-A- 5 351 568

## Beschreibung

Die vorliegende Erfindung betrifft ein Getriebe nach Anspruch 1.

Herkömmliche Getriebe sind in vielfältiger Form und Ausführung auf dem Markt bekannt und erhältlich.

Hierbei wird zunächst auf die WO99/36711 A verwiesen. Dort ist ein Getriebe mit einer Mehrzahl beweglicher Zahnsegmente aufgezeigt.

Ausserdem wird auf die DE 341053 C hingewiesen, welche ein Übersetzungsgetriebe offenbart, das aus relativ zueinander bewegbaren Teilen besteht.

Daneben soll auch auf die DE 39 30 064 A1 hingewiesen werden, welche einen Linear- oder Drehantrieb aufzeigt.

EP 0 201 730 A offenbart ein Getriebe.

Der Vollständigkeit halber wird auf die US 3,068,719 und die US 5,351,568 hingewiesen, welche Getriebe mit beweglichen Teilen offenbaren.

Im Wesentlichen werden drei unterschiedliche Technologien von Getrieben im Markt verwendet. Zum Einen sind im Markt Planetengetriebe bekannt, bei welchem beispielsweise innerhalb eines Hohlrades koaxial eine oder mehrere Planetenräder mittels eines meist zentral angeordneten Sonnenrades zur Übertragung eines Momentes auf einen Planetenradträger bzw. Abtriebselement vorgesehen sind.

Bei derartigen Umlauf- oder Planetengetriebe können keine hohen Übertragungsgeschwindigkeiten gefahren sowie keine hohen Momente bei kleinen Hohlwellendurchmesser übertragen werden. Zudem unterliegen derartige Getriebe einer geringen Steifigkeit und geringen Robustheit, wobei diese eine geringe Überlastfähigkeit besitzt.

Ferner ist nachteilig, dass insbesondere bei hohen antriebsseitigen Drehzahlen eine Übersetzung bzw. ein Übersetzungsverhältnis beschränkt ist.

Ferner sind Exzentergetriebe bekannt, bei welchen meist ein Planetenrad innerhalb einen innen verzahnten Hohlrades zur Übertragung der Drehmomenten wie zur Herstellung von Übersetzungen vorgesehen ist.

Bei Exzentergetrieben ist von Nachteil, dass diese grosse Trennkräfte erfordern, sehr grosse Lager, insbesondere bei Hohlwellenausführungen erfordern und nur für Hohlwellenausführungen mit kleinern Durchmesser geeignet sind. Auch hier weisen diese Exzentergetriebe geringe Überlastfähigkeiten und geringe Robustheiten auf.

Zudem sind die Übersetzungsbereiche beschränkt auf etwa i=30 bis i=100 und dies nur bei geringen Antriebsdrehzahlen. Bei höheren Antriebsdrehzahlen unterliegen derartige Exzentergetriebe einem hohen Verschleiss und weisen daher eine geringe Standzeit auf, was unerwünscht ist.

Zudem weisen derartige Exzentergetriebe hohe Reibungsverluste und daher geringe Wirkungsgrade auf, da Kupplungen od. dgl. an Exzentergetriebe anschliessen, um die exzentrische Abtriebsbewegung auf eine zentrische Bewegung zu verlagern. Daher ist der Wirkungsgrad des Exzentergetriebes sehr niedrig.

Insbesondere bei hohen Drehzahlen treten hohe Schwingungsproblematiken auf, die ebenfalls unerwünscht sind.

Ferner sind Harmonic Drive Getriebe bekannt, die zwar auch als Hohlwellengetriebe ausführbar sind, wobei zwischen einem meist oval ausgebildeten Antriebselement und einem innen verzahnten Hohlrad ein sogenannter Flexspline angeordnet ist, der weich und nachgiebig ausgebildet ist und das entsprechende Moment zwischen Antrieb und Hohlrad überträgt sowie eine Übersetzung zulässt.

Der sogenannte Flexspline unterliegt dauerhaften Belastungen und versagt häufig bei hohen Momenten. Zudem ist der Flexspline nicht überlastfähig und reisst häufig bei zu hohen Momenten schnell ab. Das Harmonic Drive Getriebe hat ferner einen schlechten Wirkungsgrad und eine geringe Verdrehsteifigkeit.

Der vorliegenden Erfindung liegt daher die Aufgabe zugrunde, ein Getriebe der eingangs genannten Art zu schaffen, welches die genannten Nachteile der bis jetzt bekannten Getriebe, Planetengetriebe, Exzentergetriebe sowie Harmonmic Drive Getriebe beseitigt, wobei ein sehr hoher antriebsseitiger Drehzahlbereich bis etwa 6000 U/min frei wählbar sein soll.

Ferner sollen auch bei o. g. Drehzahlbereichen kleine bis sehr hohe Momente bei höchster Leistungsdichte übertragbar sein.

Zudem sollen bei o. g. Drehzahlbereichen und bei hohen Momenten Übersetzungsverhältnisse von etwa i=10 bis i=200 frei wählbar sein.

Außerdem soll das Getriebe eine sehr hohe Kompaktheit und Komplexität bei geringstmöglichem Einbauraum und Gewicht entsprechend seiner Leistungsgrösse aufweisen.

Bei der Ausführungsform als Hohlwellengetriebe sollen unterschiedliche Durchmesser sowie auch sehr grosse Durchmesser von Antriebselement und Abtriebselement bei o. g. Übersetzungsverhältnissen und Drehzahlen gewählt werden können, auch unter Gewährleistung und Übertragung von hohen Momenten.

Zudem soll ein derartiges Getriebe verschleissarm und dauerfest mit hohen Überlastfähigkeiten und grossen Standzeiten zu betreiben sein. Hohe Verdreh- und Kippsteifigkeiten bei grossen Durchmessern und Kompaktheit sollen gewährleistet werden.

Bei der vorliegenden Erfindung hat sich als besonders vorteilhaft erwiesen ein Getriebe zu schaffen, bei welchem zwischen einem Antrieb und einem feststehenden Teil oder einem Abtrieb eine Mehrzahl von Zahnsegmenten vorgesehen sind, die die Übertragung des Momentes und die Einstellung der Übersetzung bei der linearen oder rotativen Bewegung des Antriebselementes in entsprechende Verzahnungen des Abtriebselementes oder des feststehenden Teiles linear bewegen, um bei entsprechendem Versatz der eigentlichen Zahnflanken des Zahnsegmentes ein Moment zu übertragen bei einer entsprechend gewählten Übersetzung.

Die entsprechende Übersetzung lässt sich durch die Wahl der unterschiedlichen Anzahl der Zahnsegmente zu den Verzahnungen des feststehenden Elementes, bzw. des Abtriebselementes wählbar einstellen, insbesondere auch durch die Wahl einer äusseren Kontur des Antriebselementes. Insbesondere durch die Wahl der unterschiedlichen Zahneingriffe bzw. durch die unterschiedliche Anzahl der Eingriffe der Zähne der Zahnsegmente lässt sich die Übersetzung wählen bzw. einstellen.

Dabei kann beispielsweise das Antriebselement aussen als einfache Kurvenscheibe, wie beispielsweise Nockenkontur ausgebildet sein, wobei immer nur eine erste Gruppe von Zahnsegmenten mit einem feststehenden Teil oder dem Abtriebselement in Eingriff steht, wobei auch die äussere Kontur des Abtriebselement als ovale Scheibe ausgebildet sein kann, wobei dann jeweils zwei Grupen von Zahnsegmenten mit dem Verzahnung des feststehenden Element verbunden ist, wobei auch beispielsweise bei einer polygonartig ausgeführten äusseren Kontur des Abtriebselementes drei Gruppen von Zahnsegmenten mit den entsprechenden Verzahnungen des feststehenden Elementes in Eingriff stehen.

Als Profilierung bzw. Kontur des Antriebselementes, ausgebildet als Hohlwelle, als Welle, als Linearführung, etc. können Profilierungen mit beispielsweise einer Nocke, einem Polygon oder mehreren Polygonen bis beispielsweise fünf Polygonen, Erhebungen oder dergleichen als Kontur vorgesehen sein.

Zudem soll auch daran gedacht sein, dass eine Mehrzahl von Zahnsegmenten mit mehreren Zähnen über ein Verbindungselement beispielsweise über eine Kette auf dem Polygon gleitbar ist. Hierdurch können sehr grosse Momente, bei variablen Übersetzungsverhältnissen von etwa i= 10 bis i= 200 realisiert werden.

Zudem können Drehzahlbereiche bis maximal etwa 6000 U/min antriebsseitig gewählt werden.

Dabei werden die einzelnen Gruppen von Zahnsegmenten linear, abwälzend oder als beliebige Hubbewegungen in entsprechende Verzahnungen des feststehenden Elementes mit der äusseren Kontur des Antriebselementes linear bewegt und über den entsprechenden Versatz wird auf diese Weise ein Drehmoment oder eine lineare Bewegung durchgeführt.

Dabei ist eine lineare, abwälzende oder hubartige Bewegung des Zahnsegmentes an die äussere Kontur des profilierten Abtriebselementes gekoppelt. Dies kann auf unterschiedliche Weise geschehen. Beispielsweise können einzelne Zahnsegmente mit einer Mehrzahl von einzelnen Verzahnungen kettenartig miteinander verbunden sein oder über entsprechende Halteelemente linear geführt sein, wobei die Halteelemente als Abtrieb ausgebildet sein können.

Dabei kann auch daran gedacht sein, dass mittels des Antriebselementes die einzelnen Zahnsegmente eine lineare Hubbewegung ausführen, in dem diese in entsprechenden Abtriebselementen linear geführt sind.

Durch die vorliegende Erfindung lassen sich unterschiedliche Getriebe realisieren. Bevorzugt ist die Ausbildung des Getriebes als Koaxialgetriebe, wobei innerhalb eines innen verzahnten Hohlrades koaxial ein Halteelement als Abtriebselement zur Aufnahme der Zahnflanken ausgebildet ist, und innerhalb des Halteelementes bzw. des Abtriebselementes koaxial das mit einer entsprechenden unterschiedlichen und wählbar ausgebildeten Kontur versehene Antriebselement vorgesehen ist.

Im Rahmen der vorliegenden Erfindung soll jedoch auch liegen, dass das Antriebselement als äusseres Hohlrad ausgebildet ist, wobei eine nach innen gerichtete Kontur als polygonartig ausgebildete Kontur oder Profilierung vorgesehen ist und innerhalb dieses Hohlrades dann koaxial die einzelnen Zahnsegmente nach innen gerichtet und linear radial nach innen bewegbar im als Halteelement ausgebildeten Abtriebsteil vorgesehen sind, wobei innerhalb ein feststehendes Teil mit Aussenverzahnung vorgesehen ist, in welche die Zahnsegmente zur Übertragung eines Momentes in wählbarer Übertragung eingreifen.

In einem weiteren Ausführungsbeispiel der vorliegenden Erfindung kann das Getriebe als Axialgetriebe oder Winkelgetriebe ausgebildet sein, wobei axial die einzelnen Zahnsegmente in einem als Abtriebselement ausgebildeten Elementes linear geführt sind, und über ein entsprechendes rotativ angetriebenes Antriebselement kreisringartig axial profiliert die jeweiligen Zahnflanken der Zahnsegmente gegenüber einer axialen kreisringartigen Verzahnung eines feststehenden Halteelemente bewegt werden können.

Bei einem reinen Axialgetriebe greifen unmittelbar linear axial die Zahnsegmente in das benachbarte Halteteil mit Verzahnungen ein.

Bei einer winkeligen Ausführungsform als Winkelgetriebe oder Hypoidgetriebe sind entsprechend die Zahnsegmente winkelig zur Verzahnung feststehenden Elementes ausgerichtet.

Im Rahmen der vorliegenden Erfindung soll auch liegen, dass das Getriebe als Lineargetriebe ausgebildet ist.

Dabei kann bei einem Lineargetriebe auch denkbar sein, dass das Antriebselement als Linearelement mit entsprechenden Profilierungen vorgesehen ist, die entsprechende Zahnsegmente, linear geführt in einem Abtriebselement gegenüber einem linearen feststehenden Element mit Verzahnung bewegen, um eine lineare Bewegung in gewünschter Übersetzung zwischen Abtriebselement und Antriebselement herzustellen. In diesem Fall sind die Zahnsegmente betreffen Ihrer linearen Bewegung an die äussere bzw. die äussere Kontur der Profilierung gekoppelt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen schematisch dargestellten Querschnitt durch ein nicht erfindungsgemäßes Getriebe, insbesondere ein Koaxialgetriebe;
Figur 2 einen schematisch dargestellten Querschnitt durch ein Ausführungsbeispiel eines Getriebes insbesondere Koaxialgetriebes;
Figur 3 einen schematisch dargestellten Querschnitt durch ein Ausführungsbeispiel eines Koaxialgetriebes;
Figur 4 eine teilweise aufgebrochene perspektivische Ansicht auf das nicht erfindungsgemäße Koaxialgetriebe gemäss Figur 1;
Figur 5 eine schematisch dargestellte Draufsicht auf ein weiteres Beispiel eines nicht erfindungsgemäßen Getriebes gemäss Figur 1;
Figur 6 eine perspektivische Ansicht eines Teils des Getriebes gemäss Figur 5;
Figur 7 einen schematisch dargestellten Querschnitt durch ein Beispiel eines weiteren nicht erfindungsgemäßen Getriebes, insbesondere eines Koaxialgetriebes;
Figur 8 einen schematisch dargestellten Längsschnitt durch ein Getriebe, insbesondere ein Axialgetriebe;
Figur 9 einen schematisch dargestellten Längsschnitt durch ein Getriebe, insbesondere durch ein Lineargetriebe.

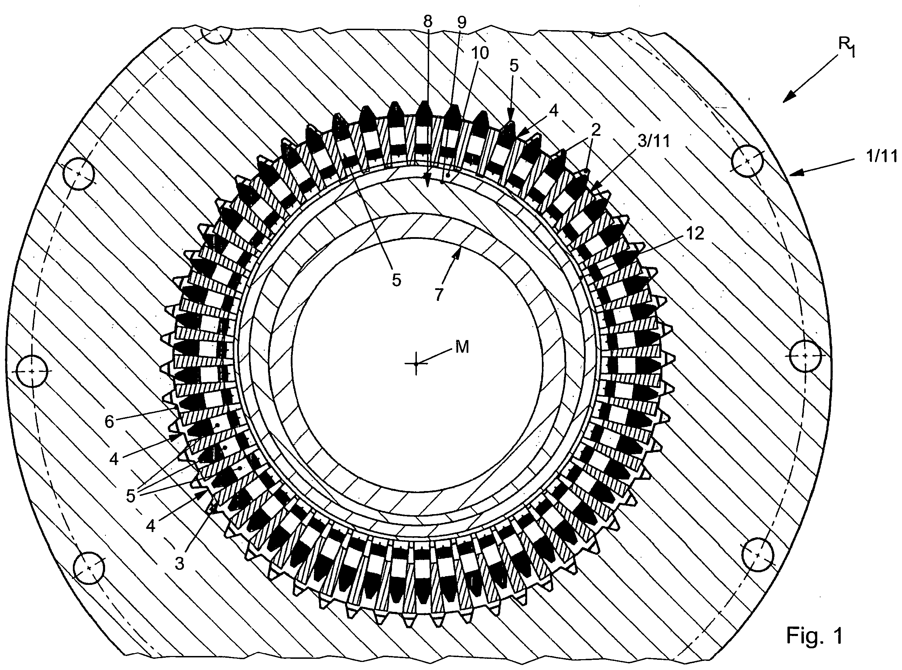

Gemäss Figur 1 weist ein Getriebe R₁, ausgebildet als Koaxialgetriebe ein Hohlrad 1 auf, welches eine innen liegende Verzahnung 2 aufweist.

Innerhalb des Hohlrades 1 ist ein Element 3 kreisringartig eingesetzt, wobei im kreisringartigen Element 3 eine Mehrzahl von radial nebeneinander und in entsprechende Führungen 4 eingesetzte Zahnsegmente 5 eingesetzt sind. Die Zahnsegmente 5 sind innerhalb der Führung 4 radial hin und her verschiebbar gelagert und sind einends mit einer Zahnflanke 6 versehen.

Innerhalb des Elementes 3 mit aufgenommenen Zahnsegmenten 5 ist ein Antriebselement 7, ausgebildet als Welle oder Hohlwelle vorgesehen, die eine äussere Profilierung 8 aufweist, die beispielsweise mit einer Kontur, einer Erhöhung, nockenartig ausgebildet ist.

Gegebenenfalls ist zwischen einer äusseren Kontur 9 der Profilierung 8 des Antriebselementes 7 und dem Element 3 bzw. einends der Zahnsegmente 5 eine Lagerung 10 vorgesehen.

Die Funktionsweise ist folgende:
Wird das Antriebselement 7 beispielsweise rotativ um eine Mittelachse M angetrieben, so werden die einzelnen Zahnsegmente 5 radial entsprechend bedingt durch die Profilierung 8 über die äussere Kontur 9 nach aussen in die Verzahnung 2 des Hohlrades 1 bewegt. Durch die unterschiedliche Anzahl von Verzahnungen 2 des Hohlrades 1 zur unterschiedlichen Anzahl der Zahnsegmente 5, die teilweise in Eingriff stehen, lässt sich ein Übersetzungsverhältnis wählbar einstellen, dabei kann das Antriebsmoment, welches über das Antriebselement 7 eingeleitet wird, wahlweise über das Element 3 als Abtriebselement oder das Hohlrad 1 als Abtriebselement 11 erfolgen.

Voraussetzung dafür ist, dass entweder das Element 3 als feststehendes Element 3 ausgebildet und das Hohlrad 1 als Abtriebselement 11 radial verdrehbar ist, oder das Hohlrad 1 feststehend ist und das Element 3 zur Aufnahme der Zahnsegmente 5 als Abtriebselement 11 ausgebildet ist. Diese beiden Varianten sind hier denkbar.

Als Lagerung 10 kann Wälzlagerung erfolgen, wobei gegebenenfalls eine derartige Lagerung 10 über einen sogenannten Flexspline 12 umfangen ist. Dies ist aber nicht zwingend erforderlich. Wichtig ist jedoch, dass die Zahnsegmente 5 direkt oder indirekt an die äussere Kontur 9 der Profilierung 8 gekoppelt sind, was die lineare Bewegung betrifft. Hinsichtlich der rotativen Bewegung des Antriebselementes 7 bzw. der rotativen Bewegung der äusseren Kontur 9 der Profilierung 8 ist diese jedoch gegenüber den Zahnsegmenten 5 entkoppelt.

Auf diese Weise werden die Zahnsegmente 5 linear und radial entsprechend der äusseren Kontur 9 gegenüber der Verzahnung 2 des Hohlrades 1 gekämmt.

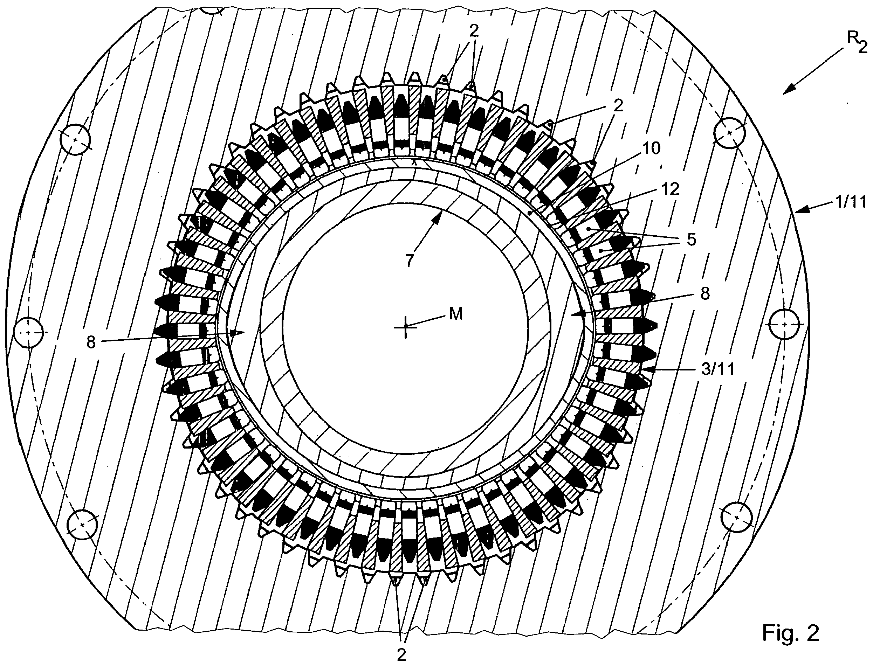

Gemäss Figur 2 ist ein Getriebe R₂ aufgezeigt, welches in etwa der eingangs genannten Art entspricht.

Unterschiedlich ist hier, dass das Antriebselement 7 eine Profilierung 8 aufweist, die zwei gegenüberliegende Erhebungen polygonartig und oval aufweist, so dass über die Anzahl der unterschiedlichen Profilierungen 8 bzw. Erhebungen des Antriebselementes 7 zwei Gruppen von Zahnsegmenten 5 in Verzahnungen 2 gleichzeitig eingreifen, so dass auch höhere Momente bei anderen Übersetzungsverhältnissen in vorbeschriebener Weise übertragen werden können.

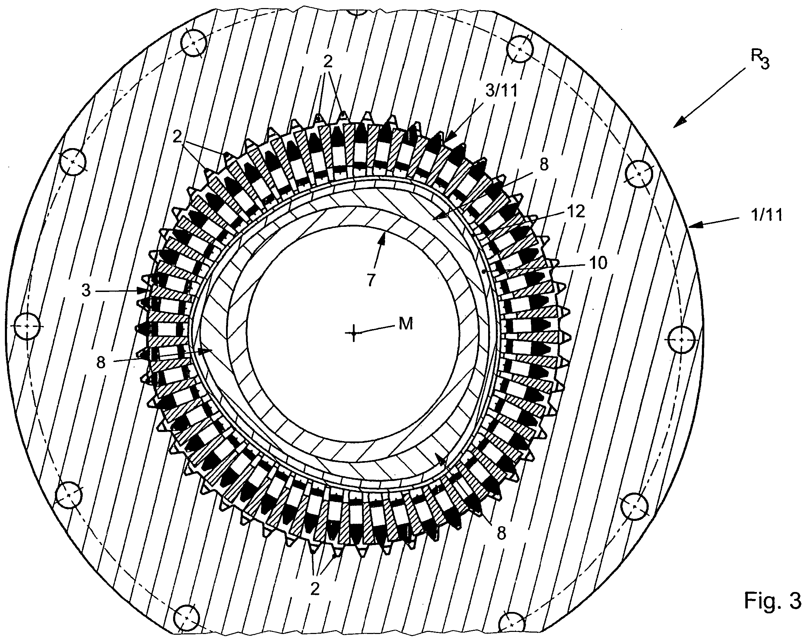

Im Ausführungsbeispiel der vorliegenden Erfindung gemäss Figur 3 ist eine Getriebe R₃ aufgezeigt, welches der Funktionsweise den Getrieben R₁ und R₂ in etwa entspricht.

Unterschiedlich ist hier, dass das Antriebselement 7 als äussere Profilierungen 8 drei polygonartige Profilierungen aufweist, und somit drei Gruppen von Zahnsegmenten 5 bildet, die gleichzeitig mit Verzahnungen 2 des Hohlrades 1 in Eingriff stehen.

Auch hierüber ist durch die variierende Anzahl der Profilierungen 8 des Antriebselementes 7 ein Übersetzungsverhältnis sowie eine höhere Momentenübertragung einstellbar bzw. veränderbar.

Gleichfalls lässt sich über die unterschiedliche Anzahl der Zahnsegmente 5 sowie der unterschiedlichen Anzahl der Verzahnungen 2 des Hohlrades 1 ebenfalls Einfluss nehmen auf ein Übersetzungsverhältnis. Ferner ist wichtig, wie es deutlich aus den Ausführungsbeispielen der Getriebe R₂, R₃ der Figuren 2 und 3 hervorgeht, eine innere Kontur der Verzahnung 2 in etwa annähernd auf eine äussere Kontur 9 des Antriebselementes 7 bzw. der Profilierung 8 angepasst ist. Gleiches gilt auch für das Element 3.

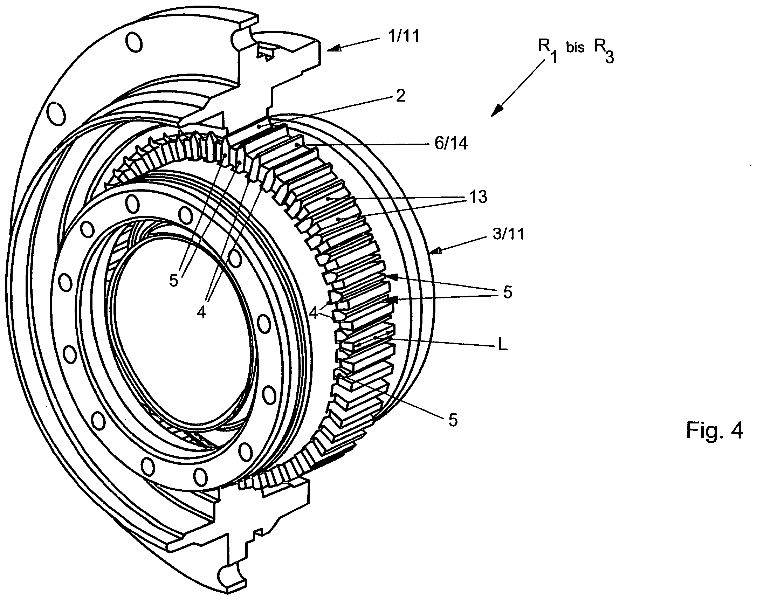

Gemäss Figur 4 ist perspektivisch ein Getriebe R₁ bis R₃ aufgezeigt.

Dort ist koaxial innerhalb des Hohlrades 1 mit innen liegender Verzahnung 2 das Element 3 angeordnet, wobei in entsprechenden schlitzartigen Führungen 4 die Zahnsegmente 5 radial und linear nach aussen bewegbar angeordnet sind.

Zur Unterstützung der Führung 4 können dem Element 3 zwischen jeweils einzelnen benachbarten Zahnsegmenten 5 zusätzlich Stützstege 13 zugeordnet sein.

Wie in Figur deutlich zu erkennen ist, ragen während des Eingriffes in die Verzahnung 2 des Hohlrades 1 die einzelnen Zähne 14 bzw. Zahnflanken 6 aus den Führungen 4, insbesondere aus den Stützstegen 13 des Elementes 3 heraus und stehen mit der Verzahnung 2 des Hohlrades 1 ein Eingriff. Die übrigen Zähne sind zurückgezogen, da nur im Bereich der Profilierung 8 Zahnsegmente 5 radial in die Verzahnung 2 geschoben ist.

Durch den jeweiligen radialen leichten Versatz der Zahnsegmente 5 gegenüber der Verzahnung lässt sich ein Antriebsmoment des Antriebselementes 7 auf Abtriebselement 11 im gewünschten Übersetzungsverhältnis übertragen.

Auch durch eine unterschiedliche Länge L sowie auch Grösse der jeweiligen Zahnsegmente 5 sowie auch durch die unterschiedliche Anzahl der Eingriffe der Zahnsegmente 5 in die Verzahnung 2 des Hohlrades 1 bzw. des Abtriebselementes 11 werden nicht nur das Übersetzungsverhältnis bestimmt, sondern auch beliebige Baugrössen, unterschiedliche Momente und Geschwindigkeiten dimensioniert.

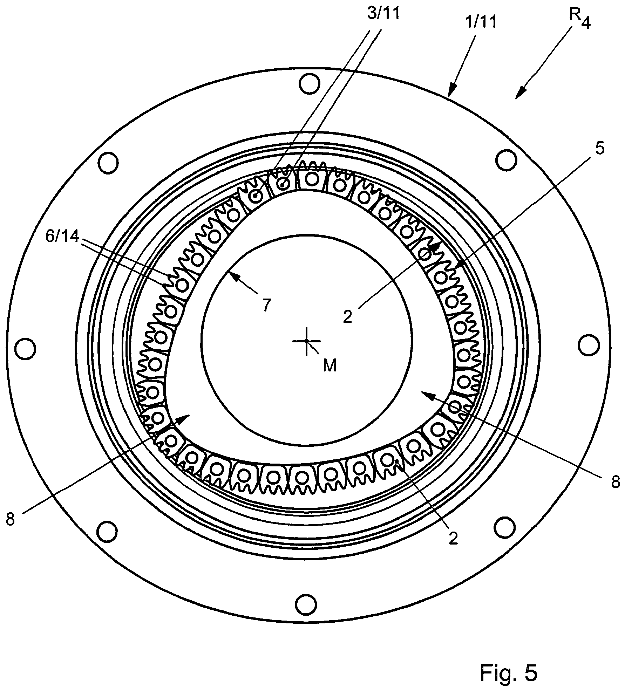

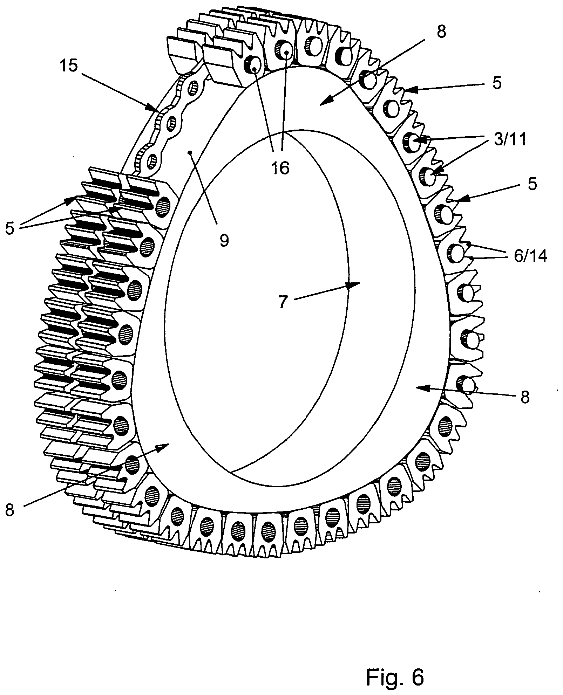

Gemäss Figur 5 weist ein Getriebe R₄, insbesondere Koaxialgetriebe ein Hohlrad 1 mit einer innenliegenden Verzahnung 2 auf, in welchem auf einer bevorzugt polygonartigen Profilierung 3 des Antriebselementes 7 eine Mehrzahl von Zahnsegmente 5 kettenartig bzw. gliederartig die Profilierungen 8 umfangen, wobei einzelne Zahnsegmente 5 auch eine Mehrzahl von einzelnen Zahnflanken 6 bzw. Zähnen 14 aufweisen können. Wie insbesondere in Figur 6 dargestellt ist, können die einzelnen Zahnsegmente 5 über bspw. eine Kette 15 rotativ entkoppelt zur äusseren Kontur 9 der Profilierung 8 auf dieser gleiten und dennoch durch die entsprechende Profilierung in die Verzahnung 2 des Hohlrades 1 zu der Übertragung der Momente und der Herstellung eines Übersetzungsverhältnisses dort abwälzend eingreifen.

Dabei sind die jeweiligen Zahnsegmente 5 über Bolzen 16 mit der Kette 15 verbunden, wobei über die Bolzen 16 als Element 3 bzw. gegebenenfalls als Abtriebselement 11 das Drehmoment übertragen wird oder hierüber die Zahnsegmente 5 verdrehsicher gesichert werden.

Über hier nicht näher dargestellte Kupplungen kann im Falle der Auslegung der Elemente 3 bzw. der Bolzen 16 als Abtriebselement 11 eine exzentrische Bewegung auf eine rotatorische Bewegung transformiert werden. Dies soll ebenfalls im Rahmen der vorliegenden Erfindung liegen.

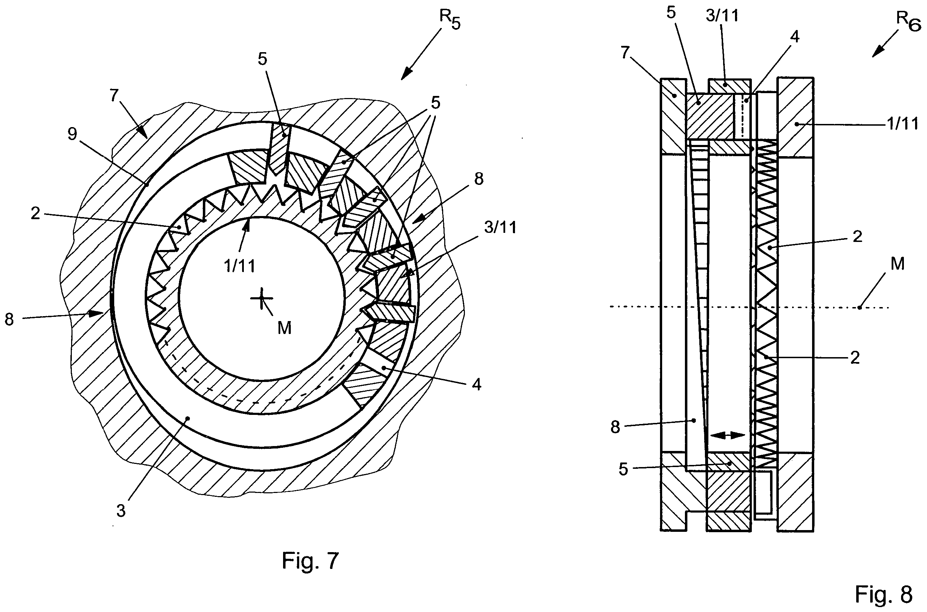

Gemäss Figur 7 ist ein Getriebe R₅, insbesondere Koaxialgetriebe aufgezeigt, welches in etwa der vorgenannten Art entspricht. Unterschiedlich ist hier, dass beim vorliegenden Getriebe R₅ das Antriebselement 7 aussen liegend angeordnet ist und mit zumindest einer oder mehreren Profilierungen 8 versehen ist, wobei das Antriebselement 7 als Hohlwelle ausgebildet ist.

Innerhalb des Antriebselementes 7 ist koaxial das Element 3 mit Führungen 4 zur radialen Aufnahme der Zahnsegmente 5 vorgesehen, wobei im vorliegenden Ausführungsbeispiel nur einige Zahnsegmente 5 angedeutet sind.

Durch entsprechendes rotatives Antreiben des äusseren Antriebselementes 7 bzw. der Profilierung 8, werden die Zahnsegmente 5 in vorbeschriebener Weise in entsprechende Aussenverzahnungen 2 des innen liegenden Hohlrades 1 bzw. Abtriebselementes 11 radial von aussen nach innen bewegt. Dabei sind die Zahnsegmente 5 an eine innere Kontur 9 der Profilierung 8 des Antriebselementes 7 radial gekoppelt und rotativ entkoppelt.

Gemäss Figur 8 ist ein Getriebe R₆ aufgezeigt, welches entsprechend der oben genannten Art ausgebildet ist. Unterschiedlich ist hier, dass das vorliegenden Getriebe R₆ als Axialgetriebe ausgebildet ist.Dies soll jedoch auch als Hyoidgetriebe ausgebildet sein können.

Dabei wird als Antriebselement 7 eine Kurvenscheibe verwendet, die zumindest eine Profilierung 8, Erhebung, Kurvenbahn od. dgl. besitzen kann, um eine Mehrzahl von Zahnsegmenten 5 einzeln, in Gruppen oder in mehreren Gruppen in entsprechende axiale Verzahnungen 2 eines Hohlrades 1 bzw. Abtriebselementes 11 zu verschieben, um ein Moment im gewünschten Übersetzungsverhältnis in vorbeschriebener Weise zu übertragen.

Dabei werden, wie es in Doppelpfeilrichtung angedeutet ist, die Zahnsegmente 5 axial verschoben. Wird das Axialgetriebe als Hypoidgetriebe ausgeführt, so sind entsprechend die Zahnsegmente 5 bzw. die stirnseitigen Verzahnungen 2 des Hohlrades 1 abgewinkelt. Hierauf sei die Erfindung nicht beschränkt.

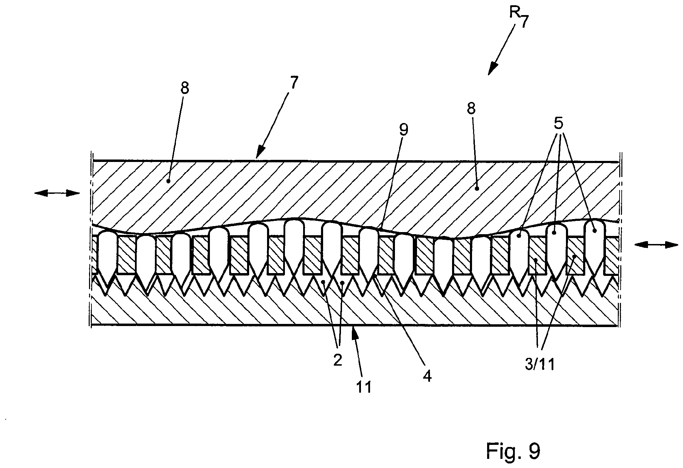

Gemäss Figur 9 ist ein Getriebe R₇ aufgezeigt, welches als Lineargetriebe ausgebildet ist.

Dabei wird als Antriebselement 7 eine lineare Stange linear bewegt, die mit entsprechenden Profilierungen 8, als Erhebungen, Bahnen od. dgl. versehen ist.

Über die Kontur 9 der Profilierungen 8 des Antriebselementes 7 lassen sich in vorbeschriebener Weise die in einem linearen Element 3 linear bewegt geführten und gehalterten Zahnsegmente 5 linear in dessen Führungen 4 hin und her bewegen.

Dabei sind die Zahnsegmente 5 in vorbeschriebener Weise in Führungen 4 gehaltert und greifen in entsprechende Verzahnungen 2 eines Abtriebselementes 11, ausgebildet als Zahnstange, ein. In diesem Fall ist das Element 3 zur Aufnahme der Zahnsegmente 5 festgelegt.

Wird das Element 3 als Abtriebselement 11 verwendet, so ist das Abtriebselement 11 mit den Verzahnungen 2 festgelegt.

Auf diese Weise lässt sich eine lineare Bewegung im gewünschten Übersetzungsverhältnis und mit gewünschtem Moment in vorbeschriebener Weise übertragen.

Auch soll daran gedacht sein, dass eine Bewegung der Zahnsegmente 5 innerhalb der Führung 4 gekoppelt ist an die äussere Kontur 9 der Profilierungen 8, wobei diese gegenüber einer linearen Bewegung des Antriebselementes 7 selbst entkoppelt sind.

Ausserdem sind die Zahnsegmente 5 mittels des Antriebselementes 7 axial gegenüber einem ggfs. feststehenden Element 3 bewegbar.

Ausserdem ist das Antriebselement 7 als linear bewegbares und mit einer profilierten Aussenkontur 9, insbesondere Profilierung 8 versehenes Antriebselement 7 ausgebildet.

Ausserdem ist das Antriebselement 7 als rotativ angetriebenes Element ausgebildet, und weist eine axiale Profilierung 8 auf, um einzelne radial angeordnete und axial bewegbare Zahnsegmente 5 gegenüber einem ggfs. feststehenden Element 3 zu bewegen.

Ausserdem sind die Mehrzahl der Zahnsegmente 5 direkt oder indirekt über die äussere Profilierung 8 des Antriebselementes 7, insbesondere dessen Kontur linear, abwälzend oder hubartig bewegbar, wobei die Zahnsegmente 5 an eine Position der äusseren Kontur 9 des Antriebselementes 7 gekoppelt sind.

Daneben weisen die Zahnsegmente 5 mehrere Zähne 14 oder Zahnflanken 6 auf.

Ausserdem sind die Zahnsegmente 5 in schlitzartigen linearen Führungen 4 in einem als Abtriebselement 11 ausgebildeten Element eingesetzt und direkt oder indirekt mit der äusseren Kontur 9 des Antriebselementes 7 unabhängig von dessen linearer oder rotativer Bewegung gekoppelt linear geführt.

Weiterhin sind eine Mehrzahl von Zahnsegmenten 5 kettenartig miteinander verbunden.

Auch weisen die Zahnsegmente 5 entsprechende Rückhalteelemente auf, die in entsprechende Führungen 4 des Antriebselementes 7, angepasst an die äussere Kontur 9 des Antriebselementes 7 eingreifen oder an entsprechenden Zwischenringen zwischen Zahnsegment 5 und der äusseren Kontur 9 des Antriebselementes 7 angreifen.

Weiter ist das Getriebe R als Koaxialgetriebe ausgebildet, und ein Antriebselement 7 als Hohlrad ausgebildet ist, welches eine nach innen gerichtete Profilierung 8, als polygonartige Kontur aufweist und innerhalb des als Hohlrades ausgebildeten Antriebselementes 7, ein koaxiales Abtriebselement 11 zur radialen Aufnahme mehrerer Zahnsegmente 5 vorgesehen ist, welche mit einem koaxial innen liegenden feststehenden Element 3 mit Aussenverzahnung zur Übertragung von Momenten und zur Herstellung einer gewünschten Übersetzung, in Eingriff steht.

Ausserdem ist das Antriebselement 7 ringartig ausgebildet, und eine axiale Profilierung 8, insbesondere als Kurvenscheibe aufweist, welche axial eine Mehrzahl von Zahnsegmenten 5 axial bewegt, die in einem radial angeordneten und ggfs. feststehendem Element 3 geführt sind, wobei durch axiales Bewegen der Zahnsegmente 5 diese in eine axiale Verzahnung 2 eines Abtriebselementes 11, insbesondere eines kreisringartigen Abtriebselementes 11 zur Übertragung von Momenten und zur Herstellung von gewünschten Übersetzungen eingreifen.

## Patentansprüche

1. Getriebe, insbesondere Koaxialgetriebe, Hohlwellengetriebe, Hypoidgetriebe Axialgetriebe oder Lineargetriebe mit einem Antriebselement (7), einem Element (3) und einem Abtriebselement (11), wobei eine Übersetzung sowie eine Übertragung eines Antriebsmomentes zwischen Antriebselement (7) und Abtriebselement (11) über eine Mehrzahl von bewegbaren Zahnsegmenten (5) erfolgt, wobei die Zahnsegmente (5) einzelne Zähne (14) aufweisen, wobei das Antriebselement (7) mit zumindest einer Profilierung (8) versehen ist, und wobei zwischen der Profilierung (8) des Antriebselementes (7) und den Zahnsegmenten eine Wälzlagerung (10) vorgesehen ist, und wobei die Zahnsegmente (5) mittels des Antriebselementes (7) gegen eine Verzahnung (2) des feststehenden Elementes (3) bewegbar sind, wobei die Mehrzahl der Zahnsegmente (5) im Abtriebselement (11) bewegbar gelagert sind, wobei die Profilierung (8) als Polygonprofil mit mehreren Erhebungen ausgebildet ist.

2. Getriebe nach Anspruch 1, **dadurch gekennzeichnet, dass** das Antriebselement (7) querschnittlich als rotativ angetriebene Welle, insbesondere Hohlwelle oder Hohlrad ausgebildet ist.

3. Getriebe nach wenigstens einem der Ansprüche 1 bis 2, **dadurch gekennzeichnet, dass** das Antriebselement (7) mit einer Profilierung (8), als Kurvenscheibe ausgebildet ist.

4. Getriebe nach wenigstens einem der Ansprüche 1 bis 3, **dadurch gekennzeichnet, dass** die Profilierung (8) als dreiseitiges oder mehrseitiges Polygonprofil ausgebildet ist.

5. Getriebe nach wenigstens einem der Ansprüche 1 bis 4, **dadurch gekennzeichnet, dass** das Antriebselement (7) radial und koaxial innerhalb der Zahnsegmente (5) mit Aussenprofilierung (8) angeordnet ist.

6. Getriebe nach wenigstens einem der Ansprüche 1 bis 5, **dadurch gekennzeichnet, dass** die Zahnsegmente (5) an die äussere Kontur (9) der Profilierung (8), eine äussere Bahn des Antriebselementes (7) in linearer Bewegungsrichtung der Zahnsegmente (5) gekoppelt sind, wobei eine lineare, abwälzende oder hubartige Bewegung der Zahnsegmente (5) gegenüber einer rotativen oder linearen Bewegung des Antriebselementes (7) entkoppelt ist.

7. Getriebe nach wenigstens einem der Ansprüche 1 bis 6, **dadurch gekennzeichnet, dass** die Zahnsegmente (5) in schlitzartigen linearen Führungen 4 in einem als Abtriebselement (11) ausgebildeten Halteelement eingesetzt und direkt oder indirekt mit der äusseren Kontur (9) der Profilierung (8) des Antriebselementes (7) unabhängig von dessen linearer oder rotativer Bewegung gekoppelt linear geführt sind.

8. Getriebe nach wenigstens einem der Ansprüche 1 bis 7, **dadurch gekennzeichnet, dass** entsprechend der äusseren Kontur des Abtriebselementes (11) eine erste Gruppe und/oder einer zweite und/oder eine dritte und/oder einer vierte Gruppe von benachbarten Zahnsegmenten (5) in entsprechende Verzahnungen (2) des feststehenden Elementes (3) zur Übertragung von Momenten und zur Herstellung gewünschter Übersetzungen eingreift.

## Claims

1. Gear mechanism, in particular coaxial gear mechanism, hollow shaft gear mechanism, hypoid gear mechanism, axial gear mechanism or linear gear mechanism, having a drive element (7), an element (3) and an output element (11), wherein a speed ratio and a transmission of a drive torque between the drive element (7) and the output element (11) takes place via a plurality of movable toothed segments (5), wherein the toothed segments (5) have individual teeth (14), wherein the drive element (7) is provided with at least one profiling (8), and wherein a roller bearing (10) is provided between the profiling (8) of the drive element (7) and the toothed segments, and wherein the toothed segments (5) can be moved by means of the drive element (7) against toothing (2) of the stationary element (3), wherein the plurality of toothed segments (5) is movably mounted in the output element (11), wherein the profiling (8) is designed as a polygonal profile having a plurality of projections.

2. Gear mechanism according to claim 1, **characterised in that** the drive element (7) is designed in cross section as a rotationally driven shaft, in particular a hollow shaft or ring gear.

3. Gear mechanism according to at least one of claim 1 or claim 2,
**characterised in that** the drive element (7) having a profiling (8) is designed as a disc cam.

4. Gear mechanism according to at least one of claims 1 to 3,
**characterised in that** the profiling (8) is designed as a three-sided or multi-sided polygonal profile.

5. Gear mechanism according to at least one of claims 1 to 4,
**characterised in that** the drive element (7) is arranged radially and coaxially within the toothed segments (5) with external profiling (8).

6. Gear mechanism according to at least one of claims 1 to 5,
**characterised in that** the toothed segments (5) are coupled to the outer contour (9) of the profiling (8), an outer path of the drive element (7) in a linear direction of movement of the toothed segments (5), a linear, rolling or stroke-like movement of the toothed segments (5) being decoupled relative to a rotational or linear movement of the drive element (7).

7. Gear mechanism according to at least one of claims 1 to 6,
**characterised in that** the toothed segments (5) are inserted in slot-like linear guides 4 in a holding element designed as an output element (11) and are linearly guided directly or indirectly with the outer contour (9) of the profiling (8) of the drive element (7) independently of its linear or rotational movement.

8. Gear mechanism according to at least one of claims 1 to 7,
**characterised in that,** corresponding to the outer contour of the output element (11), a first group and/or a second and/or a third and/or a fourth group of adjacent toothed segments (5) engages in corresponding toothings (2) of the stationary element (3) in order to transmit torques and to produce desired speed ratios.

## Revendications

1. Engrenage, en particulier engrenage coaxial, engrenage à arbre creux, engrenage hypoïde, engrenage axial ou engrenage linéaire, comportant un élément d'entraînement (7), un élément (3) et un élément entraîné (11), dans lequel une transmission et un transfert d'un couple d'entraînement entre l'élément d'entraînement (7) et l'élément entraîné (11) sont effectués par l'intermédiaire d'une pluralité de segments dentés (5) pouvant être déplacés, dans lequel les segments dentés (5) présentent des dents (14) individuelles, dans lequel l'élément d'entraînement (7) est pourvu d'au moins une partie profilée (8), et dans lequel un palier à roulement (10) est prévu entre la partie profilée (8) de l'élément d'entraînement (7) et les segments dentés, et dans lequel les segments dentés (5) peuvent être déplacés contre une denture (2) de l'élément (3) fixe à l'aide de l'élément d'entraînement (7), dans lequel la pluralité des segments dentés (5) sont montés de manière à pouvoir être déplacés dans l'élément entraîné (11), dans lequel la partie profilée (8) est réalisée sous forme de profilé polygonal comportant plusieurs protubérances.

2. Engrenage selon la revendication 1, **caractérisé en ce que** l'élément d'entraînement (7) est réalisé, en section transversale, sous la forme d'un arbre à entraînement rotatif, en particulier d'un arbre creux ou d'une roue à denture intérieure.

3. Engrenage selon au moins l'une des revendications 1 à 2,
**caractérisé en ce que** l'élément d'entraînement (7) est réalisé, avec une partie profilée (8), sous forme de came.

4. Engrenage selon au moins l'une des revendications 1 à 3,
**caractérisé en ce que** la partie profilée (8) est réalisée sous forme de profilé polygonal à trois faces ou à plusieurs faces.

5. Engrenage selon au moins l'une des revendications 1 à 4,
**caractérisé en ce que** l'élément d'entraînement (7) est disposé radialement et coaxialement à l'intérieur des segments dentés (5) avec une partie profilée extérieure (8).

6. Engrenage selon au moins l'une des revendications 1 à 5,
**caractérisé en ce que** les segments dentés (5) sont accouplés, au niveau du contour extérieur (9) de la partie profilée (8), à un rail extérieur de l'élément d'entraînement (7) dans la direction de déplacement linéaire des segments dentés (5), dans lequel un déplacement linéaire, par roulement ou suivant un mouvement de levée des segments dentés (5) est désolidarisé d'un déplacement rotatif ou linéaire de l'élément d'entraînement (7).

7. Engrenage selon au moins l'une des revendications 1 à 6,
**caractérisé en ce que** les segments dentés (5) sont insérés dans des guides 4 linéaires en forme de fente dans un élément de retenue réalisé sous forme d'élément entraîné (11), et sont guidés linéairement de manière à être accouplés directement ou indirectement au contour extérieur (9) de la partie profilée (8) de l'élément d'entraînement (7), indépendamment du déplacement linéaire ou rotatif de celui-ci.

8. Engrenage selon au moins l'une des revendications 1 à 7,
**caractérisé en ce que,** en fonction du contour extérieur de l'élément entraîné (11), un premier groupe et/ou un deuxième et/ou un troisième et/ou un quatrième groupe de segments dentés (5) adjacents viennent en prise dans des dentures (2) correspondantes de l'élément (3) fixe pour le transfert de couples et pour la réalisation de transmissions souhaitées.
